# EUROPÄISCHE PATENTANMELDUNG

(11) **EP 1 202 482 A2**
(43) Veröffentlichungstag der Anmeldung: **02.05.2002**
(21) Anmeldenummer: 01440352.1
(22) Anmeldetag: 22.10.2001
(51) Int. Cl.: H04J 3/16, H04Q 7/38

(54) **Verfahren zum Zuweisen von Ressourcen**

(30) Priorität: 27.10.2000 DE 10053352
(71) Anmelder: ALCATEL, 75008 Paris (FR)
(72) Erfinder: Seibold, Wolfram, 73630 Remshalden (DE); Wahl, Stefan, 71701 Schwieberdingen (DE); Kopf, Andreas, 70565 Stuttgart (DE)
(74) Vertreter: Menzietti, Domenico, Dipl.-Ing

(57) **Zusammenfassung**

In einem Kommunikationssystem erfolgt die Zuweisung der verfügbaren Ressourcen mittels Zeitrahmen variabler Länge. Es wird eine adaptive Reservierung von Ressourcen in Zyklen durchgeführt. Die Kalkulation der aktuellen Zeitrahmenlänge basiert beispielsweise auf dem aktuellen Verkehrsaufkommen. In einem Kommunikationssystem mit geringer Verkehrslast werden kurze Zeitrahmen für kurze Zugriffsverzögerungen und kurze Zugriffszeiten verwendet. In einem Kommunikationssystem mit hoher Verkehrslast werden lange Zeitrahmen unter Berücksichtigung einer vorgegebenen maximalen Zeitrahmenlänge verwendet, um zum einen die Fairness zu erhöhen und zum anderen die System Performance zu erhöhen. Es wird ein Ressourcen Zuweisungs- oder Zuteilungs-Algorithmus verwendet, der eine dynamische Zuweisung bzw. Zuteilung von Ressourcen durchführt durch geeignete Wahl der Zeitrahmenlängen. Als Grundeinheit der Ressourcen dient beispielsweise ein Zeitschlitz einer vorgegebenen Länge.

## Beschreibung

Die Erfindung betrifft ein Verfahren zum Zuweisen von Ressourcen.

In Kommunikationssystemen werden von einer Zentrale Sendeberechtigungen für Endstellen oder Netzelemente vergeben. Die Zuweisung von Zeitschlitzen erfolgt unter Verwendung von Zeitrahmen mit einer festen Länge. Die Länge der Zeitrahmen wird bei der Installation des Systems einmal festgelegt und bleibt für die gesamte Betriebsdauer fix. Die Festlegung einer optimierten Länge gestaltet sich schwierig. Zum einen besteht die Forderung nach kurzen Zugriffsverzögerungen. Dies spricht für die Festlegung einer geringen Länge. Zum anderen besteht die Forderung nach einer hohen System Performance. Dies spricht für eine lange Länge. Lange Zeitrahmen haben zudem den Vorteil einer besseren Fairness. Ferner ist bei langen Zeitrahmen weniger Synchronisation erforderlich durch die Verwendung langer Übertragungs-Bursts. Ein weiterer Parameter bildet das sich über die Zeit verändernde Verkehrsaufkommen. Bei der Festlegung von Zeitrahmenlängen gibt es somit sich widersprechende Forderungen.

Aufgabe der Erfindung ist es, ein Verfahren zum Zuweisen von Ressourcen bereitzustellen, dass hinsichtlich der Zeitrahmenlänge optimiert ist.

Gelöst wird diese Aufgabe durch ein Verfahren gemäß Patentanspruch 1 und eine Zentrale gemäß Patentanspruch 5 sowie ein Netzelement gemäß Patentanspruch 12.

Beim erfindungsgemäßen Verfahren erfolgt die Zuweisung der verfügbaren Ressourcen mittels Zeitrahmen variabler Länge. Es wird eine adaptive Reservierung von Ressourcen in Zyklen durchgeführt. Die Kalkulation der aktuellen Zeitrahmenlänge basiert beispielsweise auf dem aktuellen Verkehrsaufkommen. In einem Kommunikationssystem mit geringer Verkehrslast werden kurze Zeitrahmen für kurze Zugriffsverzögerungen und kurze Zugriffszeiten verwendet. In einem Kommunikationssystem mit hoher Verkehrslast werden lange Zeitrahmen unter Berücksichtigung einer vorgegebenen maximalen Zeitrahmenlänge verwendet, um zum einen die Fairness zu erhöhen und zum anderen die System Performance zu erhöhen. Es wird ein Ressourcen Zuweisungs- oder Zuteilungs-Algorithmus verwendet, der eine dynamische Zuweisung bzw. Zuteilung von Ressourcen durchführt durch geeignete Wahl der Zeitrahmenlängen. Als Grundeinheit der Ressourcen dient beispielsweise ein Zeitschlitz einer vorgegebenen Länge. Einer Endstelle oder einem Netzelement wird für einen ersten Zyklus eine bestimmte Anzahl von Zeitschlitzen für die Übertragung von Datenpaketen zugewiesen. Einer anderen Endstelle oder einem anderen Netzelement wird die gleiche Anzahl von Zeitschlitzen oder eine andere Anzahl von Zeitschlitzen für den ersten Zyklus und für die Übertragung von Datenpaketen zugewiesen. Einer weiteren Endstelle oder einem weiteren Netzelement wird die gleiche Anzahl von Zeitschlitzen oder eine andere Anzahl von Zeitschlitzen für den ersten Zyklus und für die Übertragung von Datenpaketen zugewiesen, usw. Die Länge des Zeitrahmens für den ersten Zyklus setzt sich zusammen aus den insgesamt zugewiesenen Zeitschlitzen. In einem zweiten Zyklus werden den Endstellen und/oder Netzelementen z.B. teilweise eine andere Anzahl von Zeitschlitzen zugewiesen, wodurch sich die Gesamtlänge des Zeitrahmens im zweiten Zyklus ändern kann. In einem dritten Zyklus werden den Endstellen und/oder Netzelementen z.B. teilweise wiederum eine andere Anzahl von Zeitschlitzen zugewiesen, wodurch sich die Gesamtlänge des Zeitrahmens im dritten Zyklus gegenüber dem zweiten Zyklus ändern kann, usw.

Die Erfindung ist anwendbar auf eine Vielzahl von Kommunikationssystemen, wie z.B. Vielfachzugriffssysteme, Punkt-zu-Mehrpunkt-Systeme, funkbasierte Systeme, wie UMTS, LMDS, drahtloses ATM, hybride Systeme, wie HFC oder HFR und optische Systeme; UMTS=Universal Mobile Telecommunications System, LMDS=Local Multipoint Distribution System, ATM=Asynchronous Transfer Mode, HFC=Hybrid Fibre Coax, HFR=Hybrid Fibre Radio.

Die Ressourcen können sein Zeitschlitze, Frequenzen, Kodes, Bandbreiten oder dergleichen.

Das Kommunikationssystem beinhaltet beispielsweise eine Zentrale und eine Vielzahl von Endstellen und/oder Netzelementen, die z.B. über ein Punkt-zu-Mehrpunkt-Netz miteinander verbunden sind. Die Zentrale ist beispielsweise als Head End oder Hub eines HFC-System oder eines HFR-System, als Zentrale eines LMDS-System, eines UMTS-System oder eines drahtloses ATM-System oder als Zentrale eines optischen Systems oder eines Vielfachzugriffsystems ausgebildet. Eine Endstelle beinhaltet beispielsweise ein Modem, einen Decoder, ein Cable Modem oder eine Funkstation. Ein Netzelement ist beispielsweise ein BONT, eine ONU oder eine Basisstation; BONT=Broadband Optical Network Termination, ONU=Optical Network Unit.

Für eine zentrale Zugriffssteuerung beinhaltet die Zentrale eine Steuerung zur Aussendung von Sendeberechtigungen für die Endstellen und/oder Netzelemente. Die Steuerung ist geeignet, verfügbare Ressourcen mittels Zeitrahmen variabler Länge zuzuweisen.

Für eine dezentrale Zugriffssteuerung beinhaltet jedes Netzelement eine Steuerung zur Aussendung von Sendeberechtigungen für die an das jeweilige Netzelement angeschlossenen Endstellen. Die Steuerung ist geeignet, verfügbare Ressourcen mittels Zeitrahmen variabler Länge zuzuweisen.

Bei der zentralen Zugriffssteuerung ist die Steuerung geeignet, eine Kalkulation hinsichtlich der Sendeberechtigung für individuelle Endstellen und oder individuelle Netzelemente durchzuführen. Die Kalkulation erfolgt in Abhängigkeit von empfangenen Anfragen von Endstellen oder Netzelementen und aktuellen Verbindungen.

Bei der dezentralen Zugriffssteuerung ist die Steuerung geeignet, eine Kalkulation hinsichtlich der Sendeberechtigung für individuelle Endstellen durchzuführen. Die Kalkulation erfolgt in Abhängigkeit von empfangenen Anfragen von Endstellen und aktuellen Verbindungen.

Sowohl bei der zentralen Zugriffssteuerung als auch bei der dezentralen Zugriffssteuerung beinhaltet eine Steuerung z.B. einen Zugriffssteuerungs-Controller, einen MAC-Controller, MAC=Medium Access Control, einen Prozessor, eine CPU, ein Softwareprogramm auf einer Recheneinheit oder dergleichen.

Sowohl bei der zentralen Zugriffssteuerung als auch bei der dezentralen Zugriffssteuerung erfolgt die Aussendung der Sendeberechtigungen in Zyklen, wobei in jedem Zyklus eine neue Kalkulation erfolgt. Die Zyklen können unterschiedliche Längen aufweisen.

Im folgenden wird ein Ausführungsbeispiel der Erfindung erläutert.

Ein LMDS-Kommunikationssystem hat z.B. eine Basisstation und eine bestimmte Anzahl von Funkstationen, die sich innerhalb der von der Basisstation aufgespannten Zelle befinden. In der Basisstation befindet sich eine Master Station. Diese Master Station ist die zentrale Ressourcen Zuweisungseinheit. Alle Sendeberechtigungen werden von der Basisstation zu den Funkstationen gesendet. Die Master Station beinhaltet eine Steuerung, die die verfügbaren Ressourcen, z.B. Zeitschlitze, zuweist unter Verwendung von Zeitrahmen mit einer variablen Länge. Die Kalkulation der aktuellen Zeitrahmenlänge ist abhängig vom aktuellen Verkehrsaufkommen und wird adaptiv daran angepasst. Die Zuweisung der Ressourcen erfolgt dynamisch für jeden Zyklus neu. Die Übertragung von Sendeberechtigungen erfolgt durch Verwendung von TPP; TPP=Transmit Permission Packet. Jedes TPP enthält Sendeberechtigungen für eine Vielzahl von Funkstationen, deren Anzahl z.B. der Anzahl der sich in der Zelle der Basisstation befindlichen Funkstationen oder der Anzahl der aktiven Funkstationen in der Zelle der Basisstation entspricht. Ein TPP wird stets bei den Funksstationen eintreffen, bevor die zugewiesenen Ressourcen der vorherigen TPP aufgebraucht sind. Auf diese Art und Weise ist sichergestellt, dass keine zeitlichen Lücken entstehen, in denen keine Zuweisung erfolgt ist. Die Kalkulation der Zuweisung oder Zuteilung von Sendeberechtigungen erfolgt in der Steuerung. Die Kalkulation basiert auf Anfragen, die die Basisstation von den Funkstationen erhält und auf aktuelle Verbindungen, z.B. aufgebaut über Signalisierung und Reservierung. Die Anfragen enthalten z.B. den Wunsch auf Zuteilung von mehr Zeitschlitzen aufgrund einer hohen zu übertragenden Datenmenge. Bei der Installation des Systems wird z.B. jeder Funkstation eine Sendeberechtigung mit einer minimalen Bandbreite durch Zuweisung einer minimalen Anzahl von Zeitschlitzen, z.B. einem, zur Verfügung gestellt. Jeder Funkstation oder jeder aktiven Funkstation steht diese minimale Bandbreite stets zur Verfügung. Wenn keine Anfragen nach mehr Bandbreite in der Basisstation empfangen werden, so bleibt es in jedem Zyklus bei der minimalen Bandbreitezuweisung. Ein Zyklus wird definiert durch die Zeitrahmenlänge. Ein neuer Zyklus startet, wenn die Sendeberechtigungen aufgebraucht sind, d.h. nach Beendigung des Zeitrahmens. Ein Zeitrahmen wird gebildet durch die Gesamtzahl der Zeitschlitze, die innerhalb eines Zyklus zugewiesen werden und aneinandergereiht die Länge des Zeitrahmens ergeben. Wenn nun Anfragen nach mehr Bandbreite in der Basisstation empfangen werden, so werden diese Anfragen bei der Zuweisung der Zeitschlitze im nächsten TPP berücksichtigt. Einer Funkstation können für einen Zyklus z.B. vier Zeitschlitze anstelle eines Zeitschlitzes zugewiesen werden. Die Zeitrahmenlänge erhöht sich dann um die Länge von drei Zeitschlitzen. Werden in einem weiteren Zyklus aufgrund von Anfragen durch die Funkstationen vier Funkstationen jeweils drei Zeitschlitze zugewiesen und den restlichen Funkstationen die minimale Anzahl von einem Zeitschlitz so erhöht sich die Länge des Zeitrahmens um acht Zeitschlitze im Vergleich zu einem Grundzeitrahmen, der allen Funkstationen nur die minimale Anzahl von einem Zeitschlitz pro Zyklus zuweist.

Es ist eine bestimmte maximale Zeitrahmenlänge vorgesehen. Überschreiten die Anfragen der Funkstationen zusammen mit den bereits bestehenden Verbindungen die maximale Zeitrahmenlänge, so kann die Basisstation im nachfolgenden Zyklus nicht alle Anfragen erfüllen. Ein Algorithmus sorgt für eine faire Verteilung der angeforderten Bandbreiten. Die angeforderten Bandbreiten werden beispielsweise auf mehrere Zeitrahmen verteilt. Die Zuweisung von Zeitschlitzen kann auch von Parametern abhängig gemacht werden. Beispielsweise wird eine Funkstation, die eine höhere Quality of Service Verbindung anfordert bevorzugt. Oder es wird vorab eine Prioritätenvereinbarung getroffen. Oder die Funkstationen, die die meiste Bandbreite anfordern werden bevorzugt. Oder Funkstationen, die bereit sind, mehr Gebühren zu zahlen wenn ihre Bandbreiteanforderungen möglichst schnell erfüllt werden, werden bevorzugt. Bei der fairen Verteilung werden zumindest jeder Funkstation, die Datenpakete übertragen möchte, eine Mindestbandbreite zur Verfügung gestellt.

## Patentansprüche

1. Verfahren zum Zuweisen von Ressourcen in einem Kommunikationssystem,
**dadurch gekennzeichnet,**
**dass** die Zuweisung der verfügbaren Ressourcen mittels Zeitrahmen variabler Länge erfolgt.

2. Verfahren nach Anspruch 1, **dadurch gekennzeichnet, dass** die Ressourcen Zeitschlitze, Frequenzen, Kodes oder Bandbreiten sind.

3. Verfahren nach Anspruch 1, **dadurch gekennzeichnet, dass** die aktuelle Länge in Abhängigkeit von dem aktuellen Verkehrsaufkommen gewählt und daran angepasst wird.

4. Verfahren nach Anspruch 1, **dadurch gekennzeichnet, dass** das Kommunikationssystem ein HFC-System, ein HFR-System, ein LMDS-System, ein UMTS-System, ein drahtloses ATM-System oder ein optisches System ist.

5. Zentrale für ein Kommunikationssystem, das die Zentrale und eine Vielzahl von Endstellen und/oder Netzelementen aufweist,
**dadurch gekennzeichnet,**
**dass** die Zentrale eine Steuerung zur Aussendung von Sendeberechtigungen für die Endstellen und/oder Netzelemente aufweist, und die Steuerung geeignet ist, verfügbare Ressourcen mittels Zeitrahmen variabler Länge zuzuweisen.

6. Zentrale nach Anspruch 5, **dadurch gekennzeichnet, dass** die Steuerung geeignet ist, eine Kalkulation hinsichtlich der Sendeberechtigung für individuelle Endstellen und/oder individuelle Netzelemente durchzuführen, und dass die Kalkulation in Abhängigkeit von empfangenen Anfragen von Endstellen und/oder Netzelementen und aktuellen Verbindungen erfolgt.

7. Zentrale nach Anspruch 6, **dadurch gekennzeichnet, dass** die Aussendung der Sendeberechtigungen in Zyklen und in jedem Zyklus eine neue Kalkulation erfolgt.

8. Zentrale nach Anspruch 6, **dadurch gekennzeichnet, dass** die Zyklen unterschiedliche Längen aufweisen.

9. Zentrale nach Anspruch 5, **dadurch gekennzeichnet, dass** die Übertragung der Sendeberechtigungen in TTP-Paketen erfolgt.

10. Zentrale nach Anspruch 5, **dadurch gekennzeichnet, dass** jeder Endstelle und/oder jedem Netzelement stets eine minimale Bandbreite zur Verfügung gestellt wird.

11. Zentrale nach Anspruch 5, **dadurch gekennzeichnet, dass** die Zentrale als Head End oder Hub eines HFC-System oder eines HFR-System, als Zentrale eines LMDS-System, eines UMTS-System oder eines drahtloses ATM-System oder als Zentrale eines optischen Systems oder eines Vielfachzugriffsystems ausgebildet ist.

12. Netzelement für ein Kommunikationssystem, das eine Zentrale und eine Vielzahl von Endstellen und Netzelementen aufweist,
**dadurch gekennzeichnet,**
**dass** das Netzelement eine Steuerung zur Aussendung von Sendeberechtigungen für die an das Netzelement angeschlossenen Endstellen aufweist, und die Steuerung geeignet ist, verfügbare Ressourcen mittels Zeitrahmen variabler Länge zuzuweisen.
